# FASCICULE DE BREVET EUROPEEN

(11) **EP 0 572 333 B1**
(45) Date de publication et mention de la délivrance du brevet: **10.01.1996**
(21) Numéro de dépôt: 93420205.2
(22) Date de dépôt: 21.05.1993
(51) Int. Cl.: F16K 1/226

(54) **Vanne papillon à manchette perfectionnée**
Klappenventil mit verbesserter Dichtmanschette
Butterfly valve with improved liner

(30) Priorité: 26.05.1992 FR 9206582
(43) Date de publication de la demande: 01.12.1993
(73) Titulaire: OREG (Société anonyme), F-73230 Saint Alban Leysse (FR)
(72) Inventeur: Gaime, Jean-Pierre, F-73000 Barberaz (FR); Rossier, Luc, F-73490 La Ravoire (FR)
(74) Mandataire: Poncet, Jean-François

(56) Documents cités:
- DE-A- 2 503 727
- US-A- 3 784 157
- US-A- 4 133 513

## Description

La présente invention concerne les vannes à papillon que l'on utilise généralement pour la commande de passage de fluide liquide dans les canalisations industrielles ou de distribution d'eau.

Les vannes à papillon connues comprennent un corps généralement annulaire avec un alésage principal de passage de fluide dans lequel pivote un papillon à bord généralement sphérique monté rotatif autour d'un axe transversal pour obturer sélectivement l'alésage principal de passage de fluide. Le papillon est entraîné par un arbre d'entraînement traversant un alésage transversal du corps, et est tenu par un arbre arrière logé dans un alésage arrière coaxial à l'alésage transversal et diamétralement opposé dans le corps.

Pour assurer l'étanchéité, une manchette en matière élastiquement déformable est interposée dans l'alésage principal, entre le corps et le papillon, réalisant l'étanchéité d'obturation du passage de fluide lorsque le papillon est en position fermée. La manchette comporte généralement une partie centrale tubulaire dont la face extérieure se plaque sur la paroi d'alésage du corps et est bordée de deux lèvres radiales annulaires se plaquant sur les flancs du corps. La partie centrale tubulaire est percée de deux passages transversaux traversés par l'arbre d'entraînement et par l'arbre arrière. La surface intérieure de partie centrale tubulaire de manchette est généralement cylindrique de révolution.

On a constaté, depuis longtemps, que des défauts d'étanchéité à la fermeture se produisent sous pression, principalement dans les zones de passage de l'arbre d'entraînement et de l'arbre arrière. Pour éviter ces défauts, les vannes à papillon connues, par exemple dans le document US-A-3 784 157, sont pourvues d'une manchette dont la surface intérieure de partie centrale tubulaire de manchette comprend deux zones renforcées d'étanchéité au voisinage de l'un et l'autre des passages transversaux. Les zones renforcées d'étanchéité sont des zones de plus grande épaisseur de manchette, formant une surface généralement plane d'appui pour recevoir la partie sphérique de bord de papillon proche de l'arbre d'entraînement et de l'arbre arrière. Cette zone plate se raccorde angulairement au reste de la surface intérieure de partie centrale tubulaire de manchette, généralement cylindrique de révolution.

Les solutions connues conduisent à une augmentation sensible d'étanchéité, augmentation que l'on a jugé acceptable depuis de nombreuses années, d'autant qu'elle pouvait être obtenue par une association de formes cylindriques et de formes plates qui sont des formes réalisables par des outillages relativement simples et peu onéreux.

Le problème proposé par la présente invention est d'augmenter très sensiblement les capacités d'obturation d'une telle vanne papillon, notamment afin d'obtenir une étanchéité encore nettement améliorée même dans le cas où le corps de vanne est brut de fonderie, c'est-à-dire dans le cas où le corps de vanne présente des dimensions qui ne peuvent pas être connues et maîtrisées de manière très précise. Par les procédés de fonderie, les dimensions d'alésage du corps présentent des tolérances relativement larges, et selon les cas l'étanchéité d'une telle vanne peut être plus ou moins bonne sans qu'il soit possible de la connaître de manière certaine avant réalisation complète de la vanne et essai. L'invention vise notamment à compenser de manière très large les tolérances dimensionnelles plus grandes.

Pour atteindre ces objets ainsi que d'autres, l'invention propose une nouvelle structure de manchette pour vanne papillon, dans laquelle les zones renforcées d'étanchéité, distantes l'une de l'autre d'une distance inférieure au diamètre moyen de la surface intérieure de partie centrale tubulaire, se raccordent à la partie cylindrique de révolution par des surfaces de raccordement cylindriques à concavité régulière tournée vers l'intérieur de la vanne, chaque surface de raccordement étant elle-même raccordée tangentiellement d'une part à la zone renforcée d'étanchéité et d'autre part à la partie cylindrique de révolution.

Les inventeurs ont en effet constaté que la présence de zones de raccordement à concavité régulière, remplaçant les raccordements angulaires entre les zones d'étanchéité renforcées planes et le reste de la surface cylindrique de manchette, permet d'obtenir de manière simple une augmentation très sensible des capacités d'étanchéité et de tenue en pression d'une vanne papillon. Les essais ont montré une augmentation surprenante de plus de 30 % des capacités d'obturation, c'est-à-dire que la vanne peut rester étanche jusqu'à des pressions de fluide 30 % supérieures, par rapport aux structures connues.

Selon l'invention, chaque surface de raccordement cylindrique occupe de préférence un angle A compris entre 10 et 90 degrés.

Un autre objet de l'invention est de renforcer l'étanchéité de la vanne au niveau des passages d'arbre d'entraînement et d'arbre arrière. Pour cela, les passages transversaux de la manchette, permettant le passage de l'arbre d'entraînement et de l'arbre arrière, ont une forme de manchon tubulaire dont la surface intérieure comprend des rainures annulaires de décompression.

D'autres objets, caractéristiques et avantages de la présente invention ressortiront de la description suivante de modes de réalisation particuliers, faite en relation avec les figures jointes, parmi lesquelles :
- la figure 1 est une vue de face d'une structure de vanne papillon selon l'invention ;
- la figure 2 est une vue de côté en coupe longitudinale selon le plan I-I de la figure 1, papillon fermé ;
- la figure 3 est une vue de face d'une manchette de structure connue ;
- la figure 4 est une vue de côté en coupe selon le plan II-II de la figure 3 ;
- la figure 5 est une vue de dessus en coupe transversale selon le plan III-III de la figure 3 ;
- la figure 6 est une vue de face d'une structure de manchette selon un mode de réalisation de l'invention ;
- la figure 7 est une vue de côté en coupe selon le plan IV-IV de la figure 6 ;
- la figure 8 est une vue de dessus en coupe selon le plan V-V de la figure 6 ; et
- les figures 9 à 11 illustrent en vue de face trois modes de réalisation de manchettes selon l'invention.

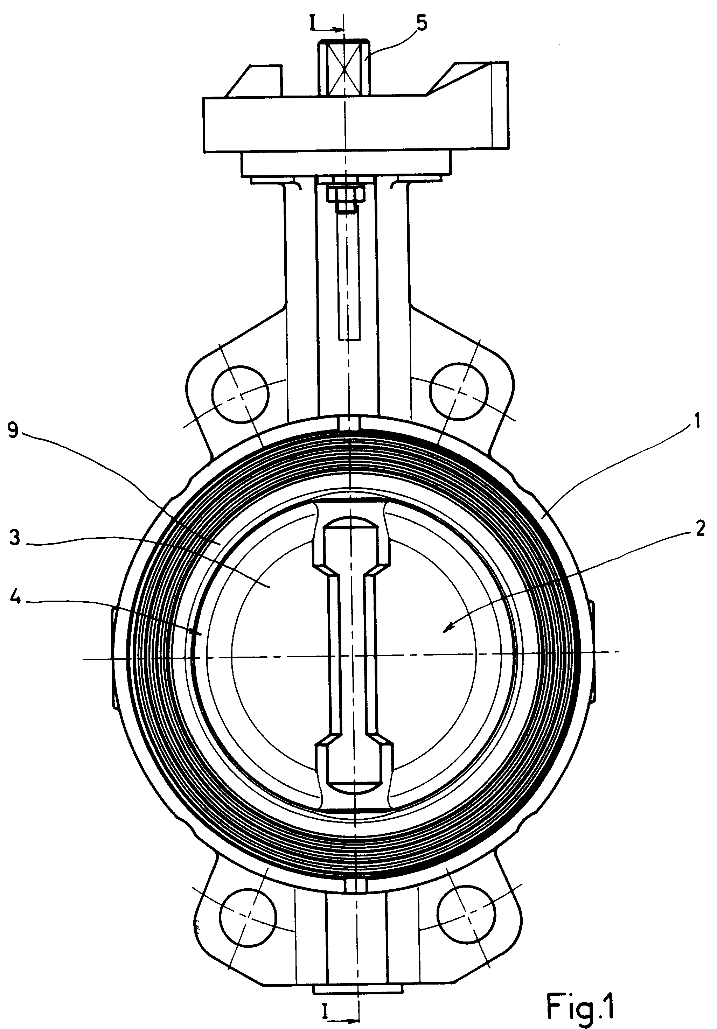

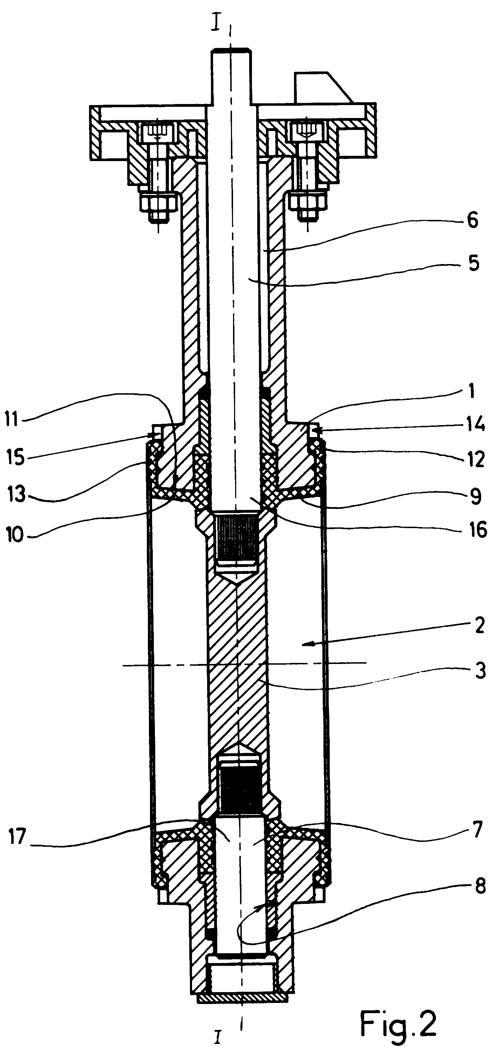

Comme le représentent les figures 1 et 2, la structure générale de vanne papillon selon l'invention reprend les parties traditionnelles des vannes à papillon connues, avec un corps 1 généralement annulaire comportant un alésage principal de passage de fluide 2. Un papillon 3 est monté rotatif dans l'alésage principal 2 du corps 1. Le papillon 3 présente la forme générale d'un disque; avec un bord 4 généralement sphérique. Le papillon 3 est entraîné en rotation par un arbre d'entraînement 5 traversant un alésage transversal 6 du corps 1, selon l'axe transversal I-I. Le papillon 3 est tenu également par un arbre arrière 7 logé dans un alésage arrière 8 diamétralement opposé à l'alésage transversal 6, dans le corps 1. Le papillon 3 est centré sur l'axe transversal I-I, c'est-à-dire que l'axe transversal I-I de rotation passe par un diamètre du disque formant le papillon 3.

Une manchette 9 en matière élastiquement déformable, telle qu'un élastomère ou un plastomère, est interposée dans l'alésage principal 2 entre le corps 1 et le papillon 3, pour assurer l'étanchéité d'obturation du passage de fluide lorsque le papillon 3 est en position fermée, comme le représente la figure 2. La manchette 9 comprend une partie centrale 10 tubulaire dont la face extérieure 11 se plaque sur la paroi d'alésage 2 du corps 1 et est bordée de deux lèvres radiales 12 et 13 annulaires se plaquant sur les flancs 14 et 15 respectifs du corps 1. La partie centrale tubulaire 10 est percée de deux passages transversaux 16 et 17 traversés respectivement par l'arbre d'entraînement 5 et par l'arbre arrière 7.

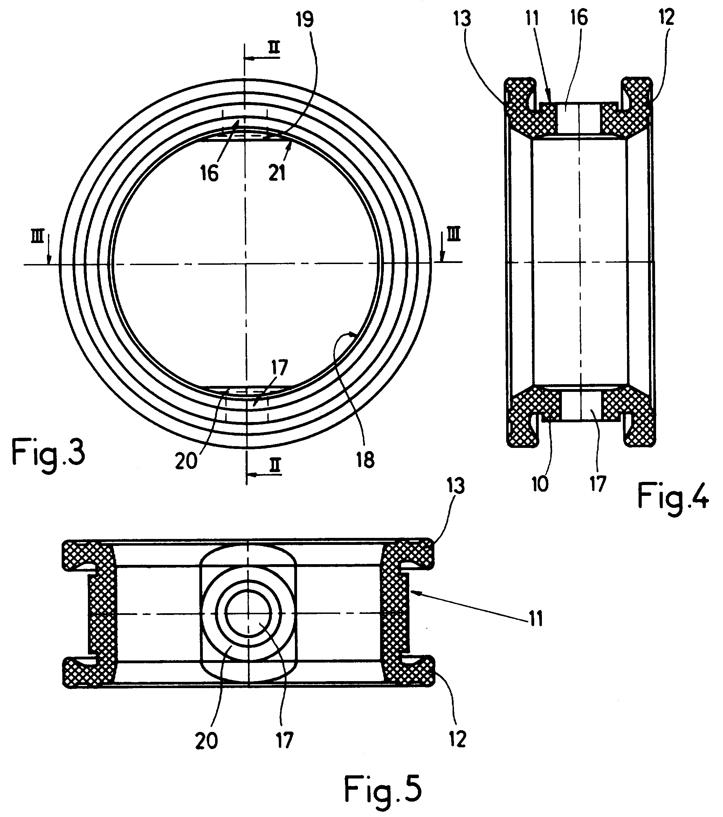

Comme le représentent les figures 3 à 5, dans une telle manchette connue, la surface intérieure 18 de partie centrale tubulaire 10 de manchette est généralement cylindrique de révolution, et comprend deux zones 19 et 20 renforcées d'étanchéité au voisinage de l'un et l'autre des passages transversaux 16 et 17.

Dans les vannes connues, les zones renforcées 20 sont planes, et se raccordent angulairement, par exemple comme le représente la référence 21, au reste de la surface intérieure 18 de partie centrale de manchette.

Dans ces manchettes connues, les passages 16 et 17 sont de simples alésages transversaux à paroi lisse, dans lesquels passent en force l'arbre d'entraînement et l'arbre arrière.

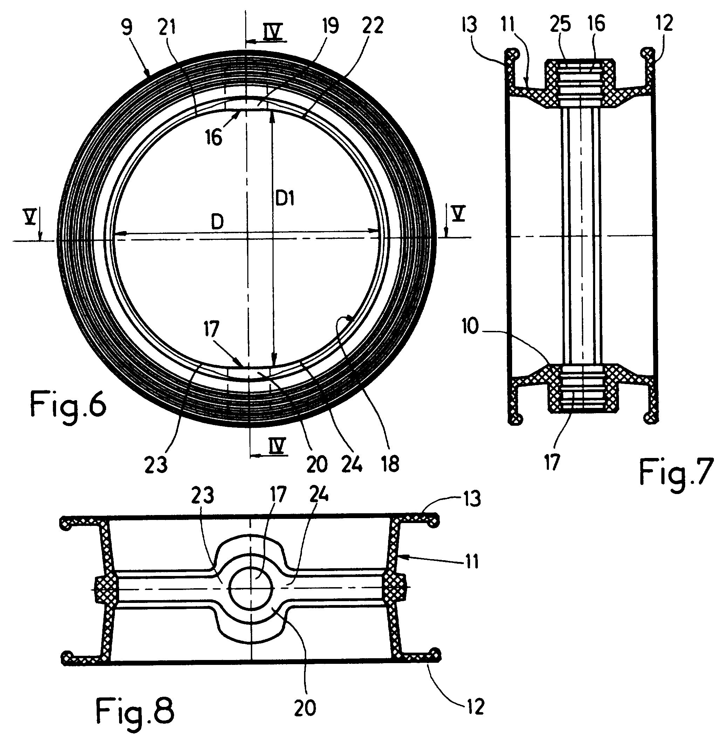

Les figures 6 à 8 représentent un mode de réalisation d'une manchette perfectionnée selon la présente invention, permettant d'obtenir une étanchéité nettement améliorée.

Dans ce mode de réalisation, les parties similaires de manchette sont repérées par les mêmes références numériques que dans les figures 1 et 2. On retrouve ainsi la partie centrale tubulaire 10, percée des deux passages transversaux 16 et 17, et se raccordant à deux lèvres radiales 12 et 13. On retrouve également deux zones renforcées 19 et 20, au voisinage des passages transversaux 16 et 17.

Selon l'invention, les zones renforcées d'étanchéité 19 et 20, distantes l'une de l'autre d'une distance D1 inférieure au diamètre D moyen de la surface intérieure 18 de partie centrale tubulaire 10, se raccordent à la partie cylindrique de révolution 18 par des surfaces de raccordement cylindriques à concavité régulière tournée vers l'intérieur de la vanne. On retrouve ainsi les surfaces de raccordement 21 et 22 pour la zone renforcée 19, et les surfaces de raccordement 23 et 24 pour la zone renforcée 20. Chaque surface de raccordement telle que la surface 21 se raccorde elle-même tangentiellement d'une part à la zone renforcée d'étanchéité correspondante telle que la zone 19, et d'autre part à la partie cylindrique de révolution de surface intérieure 18 de manchette.

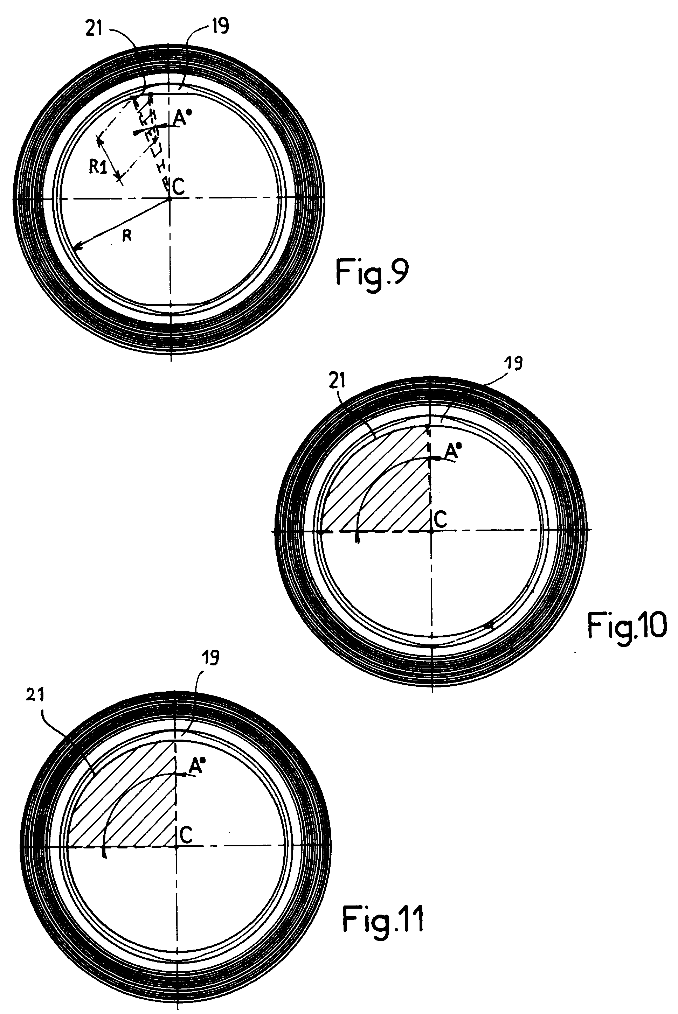

Les figures 9 à 11 illustrent trois modes de réalisation différents pour ces surfaces de raccordement.

Sur la figure 9, la surface de raccordement 21 de la zone renforcée 19 est une surface cylindrique de révolution, de rayon R1 sensiblement égal à la moitié du rayon moyen R de la surface intérieure 18 de partie centrale tubulaire de manchette, et cette surface de raccordement 21 occupe un angle A égal à 10 degrés environ de la circonférence de surface intérieure de partie centrale tubulaire de manchette. Il s'agit de la surface de raccordement minimale, en dessous de laquelle l'efficacité d'obturation n'est pas sensiblement augmentée par rapport aux structures connues de manchette.

Sur la figure 10, la surface de raccordement 21 occupe un angle A de 88 degrés environ, avec un rayon légèrement inférieur au rayon moyen R de la surface intérieure de partie centrale tubulaire de manchette.

Sur la figure 11, la surface de raccordement occupe un angle A égal à 90 degrés, et elle est elliptique, centrée au centre C de l'alésage principal. Dans ce cas, la surface intérieure de partie centrale tubulaire de manchette est entièrement elliptique.

Une surface de raccordement 21 cylindrique de révolution peut ainsi occuper un angle A compris entre 10 et 90 degrés.

Comme le représente la figure 7, les passages transversaux 16 et 17 ont une forme de manchon tubulaire, dont la surface intérieure comprend des rainures annulaires de décompression telles que la rainure 25. La présence de ces rainures améliore sensiblement l'étanchéité entre les arbres d'entraînement avant 5 et arrière 7 et la manchette 9. On peut avantageusement prévoir trois rainures de décompression telles que la rainure 25, comme le représente la figure 7.

La manchette 9 représentée sur les figures 6 à 11 peut avantageusement être réalisée en élastomère ou en plastomère. Le corps 1 peut être brut de fonderie, car l'augmentation sensible d'efficacité obtenue par la manchette permet de compenser les variations dimensionnelles résultant des procédés de fabrication de corps par fonderie.

La présente invention n'est pas limitée aux modes de réalisation qui ont été explicitement décrits, mais elle en inclut les diverses variantes et généralisations contenues dans le domaine des revendications ci-après.

## Revendications

1. Vanne papillon, comprenant :
- un corps (1) généralement annulaire, avec un alésage principal (2) de passage de fluide,
- un papillon (3) à bord (4) généralement sphérique, monté rotatif autour d'un axe transversal (I-I) centré sur le papillon pour obturer sélectivement l'alésage principal (2) de passage de fluide, entraîné par un arbre d'entraînement (5) traversant un alésage transversal (6) du corps (1), et tenu par un arbre arrière (7) logé dans un alésage arrière (8) coaxial à l'alésage transversal et diamétralement opposé,
- une manchette (9) en matière élastiquement déformable, interposée dans l'alésage principal (2) entre le corps (1) et le papillon (3) pour assurer l'étanchéité d'obturation du passage de fluide lorsque le papillon (3) est en position fermée, la manchette (9) comportant une partie centrale (10) tubulaire dont la face extérieure (11) se plaque sur la paroi d'alésage (2) du corps (1) et est bordée de deux lèvres radiales (12, 13) annulaires se plaquant sur les flancs (14, 15) du corps (1), la partie centrale tubulaire (10) étant percée de deux passages transversaux (16, 17) traversés respectivement par l'arbre d'entraînement (5) et par l'arbre arrière (7),
- la surface intérieure (18) de partie centrale tubulaire (10) de manchette étant généralement cylindrique de révolution, avec deux zones renforcées d'étanchéité (19, 20) au voisinage de l'un et l'autre des passages transversaux (16, 17),
caractérisée en ce que les zones renforcées d'étanchéité (19, 20), distantes l'une de l'autre d'une distance (D1) inférieure au diamètre moyen (D) de la surface intérieure (18) de la partie centrale tubulaire (10), se raccordent à la partie cylindrique de révolution (18) par des surfaces de raccordement (21-24) cylindriques à concavité régulière tournée vers l'intérieur de la vanne, chaque surface de raccordement (21-24) étant elle-même raccordée tangentiellement d'une part à la surface renforcée d'étanchéité (19, 20) et d'autre part à la partie cylindrique de révolution (18).

2. Vanne papillon selon la revendication 1, caractérisée en ce que la surface de raccordement (21-24) cylindrique occupe un angle (A) compris entre 10 et 90 degrés.

3. Vanne papillon selon l'une des revendications 1 ou 2, caractérisée en ce que la surface de raccordement (21-24) est cylindrique de révolution.

4. Vanne papillon selon l'une des revendications 1 ou 2, caractérisée en ce que la surface de raccordement (21-24) est elliptique.

5. Vanne papillon selon la revendication 4, caractérisée en ce que la surface intérieure (18) de partie centrale tubulaire (10) de manchette est entièrement elliptique.

6. Vanne papillon selon la revendication 3, caractérisée en ce que la surface de raccordement (21-24) occupe un angle (A) égal à 10 degrés environ, et présente un rayon (R1) sensiblement égal à la moitié du rayon moyen (R) de la surface intérieure (18) de partie centrale tubulaire (10).

7. Vanne papillon selon l'une quelconque des revendications 1 à 6, caractérisée en ce que les passages transversaux (16, 17) ont une forme de manchon tubulaire, dont la surface intérieure comprend des rainures (25) annulaires de décompression, pour améliorer l'étanchéité entre les arbres (5, 7) et la manchette (9).

8. Vanne papillon selon la revendication 7, caractérisée en ce que chaque manchon tubulaire comprend trois rainures annulaires (25).

9. Vanne papillon selon l'une quelconque des revendications 1 à 8, caractérisée en ce que la manchette (9) est réalisée en élastomère ou en plastomère.

10. Vanne papillon selon l'une quelconque des revendications 1 à 9, caractérisée en ce que le corps (1) est brut de fonderie.

## Patentansprüche

1. Klappenventil, bestehend aus:
- einem generell ringförmigen Körper (1) mit einer Fluiddurchgang-Hauptbohrung (2),
- einer Ventilklappe (3) mit einem generell runden Rand (4), die drehbar um eine an der Ventilklappe zentrierte Querachse (I-I) montiert ist, um die Fluiddurchgang-Hauptbohrung (2) selektiv zu verschließen, angetrieben durch eine Antriebswelle (5), die durch eine Querbohrung (6) des Körpers (1) hindurchgeht, und gehalten durch eine hintere Welle (7), die in einer hinteren Bohrung (8) koaxial zu der Querbohrung und diametral gegenüberliegend angeordnet ist,
- einer Manschette (9) aus einem elastisch verformbaren Material, die in der Hauptbohrung (2) zwischen dem Körper (1) und der Ventilklappe (3) angeordnet ist, um die Dichtheit des Verschlusses des Fluiddurchgangs zu sichern, wenn sich die Ventilklappe (3) in der geschlossenen Position befindet, wobei die Manschette (9) einen rohrförmigen mittleren Bereich (10) aufweist, dessen Außenfläche (11) sich an die Wand der Bohrung (2) des Körpers (1) anlegt und mit zwei ringförmigen Radiallippen (12, 13) begrenzt ist, die sich an den Flanken (14, 15) des Körpers (1) anlegen, wobei der rohrförmige mittlere Bereich (10) von zwei Querdurchgängen (16, 17) durchsetzt ist, welche von der Antriebswelle (5) und der hinteren Welle (7) durchquert sind,
- wobei die Innenfläche (18) des rohrförmigen mittleren Bereichs (10) der Manschette generell rotationszylindrisch ist mit zwei Dichtung-Verstärkungszonen (19, 20) in der Nähe des einen und des anderen der Querdurchgänge (16, 17),
dadurch gekennzeichnet, daß die Dichtung-Verstärkungs-zonen (19, 20), die voneinander in einem Abstand (D1) kleiner als der mittlere Durchmesser (D) der Innenfläche (18) des rohrförmigen mittleren Bereichs (10) beabstandet sind, mit dem rotationszylindrischen Bereich (18) durch zylindrische Anschlußflächen (21-24) mit einer gegen das Innere des Ventils ausgerichteten regelmäßigen Konkavität verbunden sind, wobei jede Anschlußfläche (21-24) für sich tangential einerseits mit der Dichtung-Verstärkungs-fläche (19, 20) und andererseits mit dem rotationszylindrischen Bereich (18) verbunden ist.

2. Klappenventil nach Anspruch 1, dadurch gekennzeichnet, daß die zylindrische Anschlußfläche (21-24) einen Winkel (A) einschließt, der zwischen 10 und 90 Grad umfaßt.

3. Klappenventil nach einem der Ansprüche 1 oder 2, dadurch gekennzeichnet, daß die Anschlußfläche (21-24) rotations-zylindrisch ist.

4. Klappenventil nach einem der Ansprüche 1 oder 2, dadurch gekennzeichnet, daß die Anschlußfläche (21-24) elliptisch ist.

5. Klappenventil nach Anspruch 4, dadurch gekennzeichnet, daß die Innenfläche (18) des rohrförmigen mittleren Bereichs (10) der Manschette insgesamt elliptisch ist.

6. Klappenventil nach Anspruch 3, dadurch gekennzeichnet, daß die Anschlußfläche (21-24) einen Winkel (A) einschließt, der etwa gleich 10 Grad ist, und einen Radius (R1) ergibt, der im wesentlichen gleich etwa der Hälfte des mittleren Radius (R) der Innenfläche (18) des rohrförmigen mittleren Bereichs (10) ist.

7. Klappenventil nach einem der Ansprüche 1 bis 6, dadurch gekennzeichnet, daß die Querdurchgänge (16, 17) als eine rohrförmige Hülse ausgebildet sind, deren Innenfläche ringförmige Druckverminderung-Rillen (25) umfassen, um die Abdichtung zwischen den Wellen (5, 7) und der Manschette (9) zu verbessern.

8. Klappenventil nach Anspruch 7, dadurch gekennzeichnet, daß jede rohrförmige Hülse drei ringförmige Rillen (25) aufweist.

9. Klappenventil nach einem der Ansprüche 1 bis 8, dadurch gekennzeichnet, daß die Manschette (9) aus einem Elastomer oder einem Plastomer besteht.

10. Klappenventil nach einem der Ansprüche 1 bis 9, dadurch gekennzeichnet, daß der Körper (1) ein unbearbeitetes Gußstück ist.

## Claims

1. Butterfly valve, comprising:
- a generally annular body (1), with a main bore (2) for passage of the fluid,
- a butterfly (3) with a generally spherical edge (4), mounted to rotate about a transverse axis (I-I) centred on the butterfly, in order selectively to close the main bore (2) for passage of fluid, driven by a drive shaft (5) passing through a transverse bore (6) of the body (1), and retained by a rear shaft (7) lodged in a rear bore (8) coaxial with the transverse bore, and diametrically opposite,
- a collar (9) of resiliently deformable material, interposed in the main bore (2) between the body (1) and the butterfly (3) in order to ensure tight closure of the fluid passage when the butterfly (3) is in the closed position, the collar (9) comprising a central tubular portion (10) the external face (11) of which is applied against the wall of the bore (2) of the body (1), and is bordered by two annular radial lips (12, 13) which are applied against the sides (14, 15) of the body (1), the central tubular portion (10) being transversed by two transverse passages (16, 17) through which there respectively pass the drive shaft (5) and the rear shaft (7),
- the internal surface (18) of the central tubular portion (10) of the collar being generally cylindrical as generated by rotation, with two reinforced closure zones (19, 20) in the vicinity of one and the other of the transverse passages (16, 17),
characterised in that the reinforced closure zones (19, 20), spaced from one another by a distance (D1) less than the average diameter (D) of the internal surface (18) of the central tubular portion (10), are connected to the portion (18) which is cylindrical as generated by rotation by cylindrical connecting surfaces (21-24) with regular concavity, turned towards the interior of the valve, each connecting surface (21-24) being itself connected tangentially on the one hand to the reinforced closure surface (19, 20) and on the other hand to the portion (18) which is cylindrical as generated by rotation.

2. Butterfly valve according to Claim 1, characterised in that the cylindrical connecting surface (21-24) occupies an angle (A) comprised between 10 and 90°.

3. Butterfly valve according to one of Claims 1 or 2, characterised in that the connecting surface (21-24) is cylindrical as generated by rotation.

4. Butterfly valve according to one of Claims 1 or 2, characterised in that the connecting surface (21-24) is elliptical.

5. Butterfly valve according to Claim 4, characterised in that the internal surface (18) of the central tubular collar portion (10) is entirely elliptical.

6. Butterfly valve according to Claim 3, characterised in that the connecting surface (21-24) occupies an angle (A) equal to approximately 10°, and has a radius (R1) substantially equal to half the average radius (R) of the internal surface (18) of the central tubular portion (10).

7. Butterfly valve according to any one of Claims 1 to 6, characterised in that the transverse passages (16, 17) are in the form of a tubular sleeve, the internal surface of which comprises annular decompression grooves (25) in order to improve the seal effectiveness between the shafts (5, 7) and the collar (9).

8. Butterfly valve according to Claim 7, characterised in that each tubular sleeve comprises three annular grooves (25) .

9. Butterfly valve according to any of Claims 1 to 8, characterised in that the collar (9) is made of elastomer or of plastomer.

10. Butterfly valve according to any of Claims 1 to 9, characterised in that the body (1) is 'as cast'.
